(19) **Europäisches Patentamt / European Patent Office / Office européen des brevets**

(11) **EP 4 497 589 A1**

(12) **EUROPEAN PATENT APPLICATION**
published in accordance with Art. 153(4) EPC

(43) Date of publication:
29.01.2025 Bulletin 2025/05

(21) Application number: 23774980.9

(22) Date of filing: 22.03.2023

(51) International Patent Classification (IPC):
*B32B 5/26* (2006.01)    *D04H 1/4209* (2012.01)
*H01M 10/625* (2014.01)    *H01M 10/6554* (2014.01)
*H01M 10/6555* (2014.01)    *H01M 10/658* (2014.01)
*H01M 50/204* (2021.01)

(52) Cooperative Patent Classification (CPC):
**B32B 5/02; B32B 5/06; B32B 5/26; B32B 7/08;
D04H 1/4209; H01M 10/0525; H01M 10/625;
H01M 10/6554; H01M 10/6555; H01M 10/658;
H01M 50/204;** Y02E 60/10

(86) International application number:
**PCT/JP2023/011330**

(87) International publication number:
**WO 2023/182385 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 22.03.2022 JP 2022045973

(71) Applicant: **IBIDEN CO., LTD.**
**Ogaki-shi, Gifu 503-8604 (JP)**

(72) Inventor: **KOGA Yoshihiro**
**Ibi-gun, Gifu 501-0695 (JP)**

(74) Representative: **Hoffmann Eitle**
**Patent- und Rechtsanwälte PartmbB**
**Arabellastraße 30**
**81925 München (DE)**

(54) **FLAMEPROOF MATERIAL, METHOD FOR PRODUCING SAME, AND BATTERY MODULE**

(57) Provided are: a flameproof material that is configured as a multilayer structure, thus has an excellent heat insulation effect and flameproofing effect, and additionally has excellent reliability in which the layering state of each layer is suitably maintained without using an adhesive; a method for producing the flameproof material; and a battery module. The flameproof material (1) includes a heat insulation material (10) containing inorganic fibers or infusible fibers, and an inorganic fiber cloth (20). The heat insulation material (10) and the inorganic fiber cloth (20) are integrated by a physical means that is preferably at least one of needling, resin stapling, and sewing. In addition, storage batteries (110) are accommodated in a battery case (120) in the battery module (100), and the flameproof material (1) is disposed in at least one of the lid, the side walls, and the bottom wall of the battery case (120) and/or the area between the storage batteries (110).

FIG.1

**Description**

TECHNICAL FIELD

The present invention relates to a flameproof material, a production method therefor, and a battery package containing a flameproof material.

BACKGROUND ART

In recent years, a lithium ion secondary battery has been used in electric vehicles and the like for environmental conservation. However, since the lithium ion secondary battery contains an organic electrolytic solution, when the battery ignites during thermal runaway, there is a risk that a flame is generated and damages a battery pack.

As a countermeasure, a heat insulation material containing an inorganic fiber and an inorganic particle, and a flameproof material in which multiple kinds of layers are laminated to improve a heat insulation or flameproof effect are used. For example, Patent Literature 1 proposes a multi-layered heat insulation element obtained by providing and laminating, between a first covering layer and a second covering layer, an intermediate material including at least one heat-resistant fiber layer and an intermediate layer such as an aluminum foil.

CITATION LIST

PATENT LITERATURE

Patent Literature 1: JP2021-507483A

SUMMARY OF INVENTION

TECHNICAL PROBLEM

However, in the multi-layered heat insulation element in Patent Literature 1, the covering layer and the intermediate material are bonded together by adhesion, which further requires a adhesive and an adhesive layer coating step. Therefore, there is a risk that the adhesive strength decreases due to selection of an adhesive suitable for adhesion to the covering layer or the intermediate material, insufficient coating with the adhesive, deterioration of the adhesive due to repeated charging and discharging, or the like. In addition, there is a risk that the adhesive peels off when subjected to external forces such as bending or twisting.

Therefore, an object of the present invention is to provide a flameproof material that has a multi-layered structure, has an excellent heat insulation or flameproof effect, maintains a laminated state of layers in good condition without using an adhesive, and has excellent reliability, a production method therefor, and a battery module.

SOLUTION TO PROBLEM

The above object of the present invention is achieved by the following configuration [1] relating to a flameproof material.

[1] A flameproof material containing:

a heat insulation material containing an inorganic fiber or an infusible fiber; and
an inorganic fiber cloth, in which
the heat insulation material and the inorganic fiber cloth are integrated to each other by physical means.
In addition, preferred embodiments of the present invention relating to the flameproof material relate to the following [2] to [17].

[2] The flameproof material according to [1], in which the physical means is at least one of needling, a resin staple, a resin tag pin, or thread sewing.
[3] The flameproof material according to [1], in which the inorganic fiber or the infusible fiber in the heat insulation material and an inorganic fiber of the inorganic fiber cloth are intertwined to be integrated.
[4] The flameproof material according to [3], in which the physical means is needling.
[5] The flameproof material according to any one of [1] to [4], in which the inorganic fiber of the heat insulation material contains a first inorganic fiber and a second inorganic fiber different from each other in at least one property selected from an average fiber diameter, a shape, and a glass transition point.

[6] The flameproof material according to [5], in which

the average fiber diameter of the first inorganic fiber is larger than the average fiber diameter of the second inorganic fiber, and

the first inorganic fiber is linear or acicular, and the second inorganic fiber is dendritic or curly.

[7] The flameproof material according to [5] or [6], in which

the first inorganic fiber is an amorphous fiber,

the second inorganic fiber is at least one kind of fiber selected from a crystalline fiber and an amorphous fiber which has a glass transition point higher than the glass transition point of the first inorganic fiber, and

the average fiber diameter of the first inorganic fiber is larger than the average fiber diameter of the second inorganic fiber.

[8] The flameproof material according to any one of [1] to [7], in which the infusible fiber has a carbon content of 55 mass% to 95 mass%.

[9] The flameproof material according to any one of [1] to [8], in which the infusible fiber is composed of a short fiber.

[10] The flameproof material according to any one of [1] to [9], in which the infusible fiber has an average fiber diameter of 1 $\mu$m to 30 $\mu$m.

[11] The flameproof material according to any one of [1] to [10], in which the heat insulation material contains an organic fiber.

[12] The flameproof material according to any one of [1] to [11], in which the heat insulation material contains an inorganic particle.

[13] The flameproof material according to [12], in which the inorganic particle includes a first inorganic particle and a second inorganic particle having average particle diameters different from each other.

[14] The flameproof material according to [13], in which the first inorganic particle is composed of at least one kind selected from an oxide particle, a carbide particle, a nitride particle, and an inorganic hydrate particle.

[15] The flameproof material according to [13] or [14], in which the first inorganic particle is composed of at least one kind selected from a nanoparticle, a hollow particle, and a porous particle.

[16] The flameproof material according to any one of [13] to [15], in which the first inorganic particle is composed of at least one kind selected from an oxide particle, a carbide particle, a nitride particle, and an inorganic hydrate particle.

[17] The flameproof material according to any one of [13] to [16], in which the second inorganic particle is a metal oxide particle.

In addition, the above object of the present invention is achieved by the following configuration [18] relating to a flameproof material production method.

[18] A method for producing the flameproof material according to any one of [1] to [17], including:

joining the heat insulation material and the inorganic fiber cloth by physical means.

In addition, preferred embodiments of the present invention relating to the flameproof material production method relate to the following [19].

[19] The method for producing the flameproof material according to [18], in which the physical means is at least one of needling, a resin staple, or thread sewing.

Further, the above object of the present invention is achieved by the following configuration [20] relating to a battery module.

[20] A battery module including:

a storage battery housed in a battery case; and

the flameproof material according to any one of [1] to [17] provided on at least one of a canopy of the battery case, a side wall of the battery case, a bottom wall of the battery case, or between the storage batteries.

ADVANTAGEOUS EFFECTS OF INVENTION

With the flameproof material according to the present invention, a heat insulation material containing an inorganic fiber or an infusible fiber provides an excellent heat insulation or flameproof effect. Therefore, in the case where the flameproof material according to the present invention is applied to a battery module, when thermal runaway occurs at a storage battery, it contributes to flameproofing of other storage batteries or the battery case. In addition, when thermal runaway occurs at a storage battery, scattered matters collide with the heat insulation material and damage the heat insulation material, but the inorganic fiber cloth prevents the scattered matters from directly impacting the heat insulation material.

Further, the heat insulation material containing an inorganic fiber or an infusible fiber, and the inorganic fiber cloth are joined to each other by physical means such as needling, a resin staple, a resin tag pin, and thread sewing without using an adhesive. Therefore, there is no need to select an adhesive or apply a coating step, making the production easy, and there is no risk of decrease in adhesive strength. In addition, there is no risk that the adhesive peels off when the flameproof material is subjected to external forces such as bending or twisting, and followability is also improved.

In this way, the flameproof material according to the present invention has an excellent heat insulation or flameproof effect, can sufficiently cope with thermal runaway of a storage battery, is easy to produce, and does not cause an increase in cost.

Further, in the battery module according to the present invention, since the flameproof material according to the present invention is provided in the battery case and between the storage batteries, even when thermal runaway occurs, the spread of fire to the outside can be more reliably prevented.

BRIEF DESCRIPTION OF DRAWINGS

[Fig. 1] Fig. 1 is a diagram showing an example of a needling device for performing needling as physical means.
[Fig. 2] (A) in Fig. 2 is a schematic cross-sectional view showing a flameproof material joined by needling. (B) in Fig. 2 is an enlarged view of a portion A in (A) in Fig. 2.
[Fig. 3] Fig. 3 is a schematic cross-sectional view showing a flameproof material joined with a resin staple as physical means.
[Fig. 4] Fig. 4 is a schematic cross-sectional view showing a flameproof material joined with a resin tag pin as physical means.
[Fig. 5] Fig. 5 is a schematic cross-sectional view showing a flameproof material joined with thread sewing as physical means.
[Fig. 6] Fig. 6 is a cross-sectional view showing a battery module according to an embodiment of the present invention.

DESCRIPTION OF EMBODIMENTS

Hereinafter, an embodiment of the present invention will be described in detail with reference to the drawings. Note that the present invention is not limited to the embodiment described below, and can be freely changed and implemented without departing from the gist of the present invention.

[Flameproof Material]

In a flameproof material according to the present embodiment, a heat insulation material containing an inorganic fiber or an infusible fiber, and an inorganic fiber cloth are joined to each other by physical means such as needling, a resin staple, and thread sewing without using an adhesive. The heat insulation material containing an inorganic fiber or an infusible fiber provides an excellent heat insulation or flameproof effect. Therefore, in the case where the flameproof material is applied to a battery module, when thermal runaway occurs at a storage battery, it contributes to flameproofing of other storage batteries or a battery case. When thermal runaway occurs at a storage battery, scattered matters collide with the heat insulation material and damage the heat insulation material containing an inorganic fiber or an infusible fiber, but the inorganic fiber cloth prevents the scattered matters from directly impacting the heat insulation material.

Hereinafter, materials for forming the heat insulation material containing an inorganic fiber or an infusible fiber and the inorganic fiber cloth will be described in detail.

<Heat Insulation Material>

(Inorganic Fiber)

Inorganic fibers commonly used for a heat insulation material can be used as the inorganic fiber to be the heat insulation material. It is preferable that the inorganic fiber contains a first inorganic fiber and a second inorganic fiber different from each other in at least one property selected from an average fiber diameter, a shape, and a glass transition point. When two kinds of inorganic fibers having different properties are contained, mechanical strength of the heat insulation material and a retention property for an inorganic particle in the case of containing an inorganic particle to be described later can be improved.

(Two Kinds of Inorganic Fibers Having Different Average Fiber Diameters and Fiber Shapes)

When two kinds of inorganic fibers are contained, it is preferable that the average fiber diameter of the first inorganic fiber is larger than the average fiber diameter of the second inorganic fiber, the first inorganic fiber is linear or acicular, and the second inorganic fiber is dendritic or curly. The first inorganic fiber having a large average fiber diameter (large diameter) has an effect of improving the mechanical strength and the shape retention property of the heat insulation material. The above effect can be obtained by making one of the two kinds of inorganic fibers, for example, the first inorganic fiber, larger in diameter than that of the second inorganic fiber. Since external impacts may act on the flameproof material, the containing of the first inorganic fiber in the heat insulation material improves impact resistance. External impacts include, for example, a pressing force due to expansion of battery cells, or a wind pressure due to ignition of battery cells.

In addition, in order to improve the mechanical strength and the shape retention property of the heat insulation material, it is particularly preferable that the first inorganic fiber is linear or acicular. Note that a linear or acicular fiber refers to a fiber having a degree of crimp of, for example, less than 10%, and preferably 5% or less , the degree of crimp being described later.

More specifically, the average fiber diameter of the first inorganic fiber is preferably 1 $\mu$m or more, and more preferably 3 $\mu$m or more. When the first inorganic fiber is too thick, there is a risk that moldability and processability decrease. Therefore, the average fiber diameter of the first inorganic fiber is preferably 20 $\mu$m or less, and more preferably 15 $\mu$m or less.

Note that the fiber length of the first inorganic fiber is preferably 100 mm or less since when it is too long, there is a risk that the moldability and the processability decrease. Further, the fiber length of the first inorganic fiber is preferably 0.1 mm or more since when it is too short, the shape retention property and the mechanical strength decrease.

On the other hand, the second inorganic fiber having a small average fiber diameter (small diameter) has an effect of improving the retention property for an organic fiber or the inorganic particle in the case of blending the same and increasing flexibility of the heat insulation material. Therefore, it is preferable that the second inorganic fiber has a diameter smaller than that of the first inorganic fiber.

More specifically, in order to improve the retention property for the organic fiber or the inorganic particle, it is preferable that the second inorganic fiber is easily deformable and has flexibility. Therefore, the average fiber diameter of the second inorganic fiber having a small diameter is preferably less than 1 $\mu$m, and more preferably 0.1 $\mu$m or less. However, when the second inorganic fiber is too thin, the second inorganic fiber is easily broken, and an ability to retain the organic fiber or the inorganic particle decreases. In addition, a large proportion of fibers remain entangled in the heat insulation material without retaining the organic fiber or the inorganic particle, and in addition to a decrease in ability to retain the organic fiber or the inorganic particle, the moldability and the shape retention property also become poor. Therefore, the average fiber diameter of the second inorganic fiber is preferably 1 nm or more, and more preferably 10 nm or more.

Note that the fiber length of the second inorganic fiber is preferably 0.1 mm or less since when the second inorganic fiber is too long, the moldability and the shape retention property decrease. Further, the fiber length of the second inorganic fiber is preferably 1 $\mu$m or more since when it is too short, the shape retention property and the mechanical strength decrease.

In addition, the second inorganic fiber is preferably dendritic or curly. Having such a shape, the second inorganic fiber is well entangled with the organic fiber or the inorganic particle, and the ability to retain the organic fiber or the inorganic particle is improved. In addition, when the heat insulation material is subjected to a pressing force or a wind pressure, the second inorganic fiber is suppressed from slipping and moving, thereby improving the mechanical strength, particularly against an external pressing force or impact.

Note that dendritic refers to a two-dimensionally or three-dimensionally branched structure, for example, feather shape, tetrapod shape, radial, or three-dimensional mesh shape.

When the second inorganic fiber is dendritic, the average fiber diameter can be obtained by measuring the diameters of a trunk and branches at several points using an SEM and calculating the average value thereof.

In addition, curly refers to a structure in which the fibers are bent in various directions. As one method of quantifying the curly form, it is known to calculate the degree of crimp from an electron micrograph, which can be calculated according to the following equation, for example.

$$\text{Degree of crimp (\%)} = (\text{fiber length - distance between fiber ends})/(\text{fiber length}) \times 100$$

Here, both the fiber length and the distance between fiber ends are measured values on an electron micrograph. That is, the fiber length and the distance between fiber ends are values obtained by projection onto a two-dimensional plane, and are shorter than actual values. Based on this equation, the degree of crimp of the second inorganic fiber is preferably 10% or more, and more preferably 30% or more. When the degree of crimp is small, the ability to retain the organic fiber or the inorganic particle decreases, and entanglement (network) between the second inorganic fibers and between the first inorganic fiber and the second inorganic fiber is difficult to form.

(Two Kinds of Inorganic Fibers Having Different Glass Transition Points)

When two kinds of inorganic fibers are contained, it is preferable that the first inorganic fiber is an amorphous fiber, the second inorganic fiber is at least one kind of fiber selected from a crystalline fiber and an amorphous fiber which has a glass transition point higher than that of the first inorganic fiber.

The melting point of the crystalline inorganic fiber is usually higher than the glass transition point of the amorphous inorganic fiber. Therefore, when the first inorganic fiber is exposed to a high temperature, the surface thereof softens before the second inorganic fiber and binds the organic fiber or the inorganic particle. Therefore, by containing the first inorganic fiber, the mechanical strength of the heat insulation material can be improved.

Specifically, as the first inorganic fiber, an inorganic fiber having a melting point of lower than 700°C is preferred, and many amorphous inorganic fibers can be used. Among them, a fiber containing $SiO_2$ is preferred, and a glass fiber is more preferred because of being inexpensive, easily available, and having excellent handling properties.

As described above, the second inorganic fiber is composed of at least one kind of fiber selected from a crystalline fiber and an amorphous fiber which has a glass transition point higher than that of the first inorganic fiber. As the second inorganic fiber, many crystalline inorganic fibers can be used.

When the second inorganic fiber is composed of a crystalline fiber or one having a glass transition point higher than that of the first inorganic fiber, even when the first inorganic fiber softens when exposed to a high temperature, the second inorganic fiber does not melt or soften. Therefore, in the case where the flameproof material is applied to a battery module, for example, the shape is maintained even when thermal runaway occurs.

In addition, when the second inorganic fiber does not melt or soften, minute spaces are maintained between particles, between the particle and the fiber, and between fibers, so that air exhibits a heat insulation effect.

When the second inorganic fiber is crystalline, specifically, ceramic-based fibers such as a silica fiber, an alumina fiber, an alumina silicate fiber, a zirconia fiber, a carbon fiber, a soluble fiber, a refractory ceramic fiber, an aerogel composite, a magnesium silicate fiber, an alkaline earth silicate fiber, and a potassium titanate fiber, glass-based fibers such as a glass fiber and glass wool, rock wool, a basalt fiber, and natural mineral-based fibers such as wollastonite as mineral-based fibers other than those listed above can be used.

One having a melting point of higher than 1000°C can be suitably used since, even when thermal runaway occurs at the battery cell, the second inorganic fiber does not melt or soften and can maintain the shape. Among the fibers listed as the above second inorganic fiber, for example, it is more preferable to use ceramic-based fibers such as a silica fiber, an alumina fiber, and an alumina silicate fiber, and a natural mineral-based fiber. Among them, it is still more preferable to use one having a melting point of higher than 1000°C.

In addition, even when the second inorganic fiber is amorphous, any fiber having a glass transition point higher than that of the first inorganic fiber can be used. For example, a glass fiber having a glass transition point higher than that of the first inorganic fiber may be used as the second inorganic fiber.

Note that, as the second inorganic fiber, the various illustrated inorganic fibers may be used alone, or two or more kinds thereof may be used in combination.

As described above, the first inorganic fiber has a glass transition point lower than that of the second inorganic fiber, and when exposed to a high temperature, the first inorganic fiber softens first. Therefore, the first inorganic fiber can bind the organic fiber or the inorganic particle. However, for example, in the case where the second inorganic fiber is amorphous and has a fiber diameter smaller than the fiber diameter of the first inorganic fiber, when the glass transition points of the first inorganic fiber and the second inorganic fiber are close to each other, there is a risk that the second inorganic fiber softens first. Therefore, when the second inorganic fiber is an amorphous fiber, the glass transition point of the second inorganic fiber is preferably 100°C or more, and more preferably 300°C or more, higher than the glass transition point of the first inorganic fiber.

Note that, the fiber length of the first inorganic fiber is preferably 100 mm or less, and is preferably 0.1 mm or more. The fiber length of the second inorganic fiber is preferably 0.1 mm or less. The reasons are as described above.

(Two Kinds of Inorganic Fibers Having Different Glass Transition Points and Average Fiber Diameters)

When two kinds of inorganic fibers are contained, it is preferable that the first inorganic fiber is an amorphous fiber, the second inorganic fiber is at least one kind of fiber selected from a crystalline fiber and an amorphous fiber which has a glass transition point higher than that of the first inorganic fiber, and the average fiber diameter of the first inorganic fiber is larger than the average fiber diameter of the second inorganic fiber.

As described above, it is preferable that the average fiber diameter of the first inorganic fiber is larger than that of the second inorganic fiber. In addition, it is preferable that the large-diameter first inorganic fiber is an amorphous fiber, and the small-diameter second inorganic fiber is composed of at least one kind of fiber selected from a crystalline fiber and an amorphous fiber which has glass transition point higher than that of the first inorganic fiber. Accordingly, the first inorganic fiber has a low glass transition point and softens early, and thus becomes film-like and hardens as the temperature rises. On the other hand, when the small-diameter second inorganic fiber is composed of at least one kind of fiber selected from a crystalline fiber and an amorphous fiber which has a glass transition point higher than that of the first inorganic fiber, even when the temperature rises, the small-diameter second inorganic fiber remains in the form of fiber. Therefore, the structure of the heat insulation material can be retained and powder falling can be prevented.

Note that even in this case, the fiber length of the first inorganic fiber is preferably 100 mm or less, and is preferably 0.1 mm or more. The fiber length of the second inorganic fiber is preferably 0.1 mm or less. The reasons are as described above.

(Contents of First Inorganic Fiber and Second Inorganic Fiber)

When two kinds of inorganic fibers are contained, the content of the first inorganic fiber is preferably 3 mass% or more and 30 mass% or less with respect to the total mass of the heat insulation material, and the content of the second inorganic fiber is preferably 3 mass% or more and 30 mass% or less with respect to the total mass of the heat insulation material.

In addition, the content of the first inorganic fiber is more preferably 5 mass% or more and 15 mass% or less with respect to the total mass of the heat insulation material, and the content of the second inorganic fiber is more preferably 5 mass% or more and 15 mass% or less with respect to the total mass of the heat insulation material. With such contents, the shape retention property, pressing force resistance, and wind pressure resistance of the first inorganic fiber and the ability to retain the inorganic particle of the second inorganic fiber are exhibited in a well-balanced manner.

(Other Blending Materials)

The heat insulation material may contain different inorganic fibers in addition to the first inorganic fiber and the second inorganic fiber described above. In addition, an organic binder, an organic fiber, and an inorganic particle may be contained.

(Resin Binder)

The above inorganic fiber can also be bound with a resin binder. The resin binder is not particularly limited as long as it has a glass transition point lower than the glass transition point of an organic fiber to be described later. For example, a resin binder 9 containing at least one selected from a styrene-butadiene resin, an acrylic resin, a silicone-acrylic resin, and a styrene resin can be used.

The glass transition point of the resin binder is not particularly defined, and is preferably -10°C or higher. Note that, when the glass transition point of the resin binder 9 is equal to or higher than room temperature, in the case of using a heat insulation material containing the resin binder at room temperature, the strength of the heat insulation material can be further improved. Therefore, the glass transition point of the resin binder is, for example, more preferably 20°C or higher, still more preferably 30°C or higher, even more preferably 50°C or higher, and particularly preferably 60°C or higher.

The content of the resin binder is preferably 0.5 mass% or more, and more preferably 1 mass% or more with respect to the total mass of the heat insulation material. In addition, it is preferably 20 mass% or less, and more preferably 10 mass% or less.

(Organic Fiber)

In addition to the above inorganic fiber, an organic fiber may also be contained. As the organic fiber, for example, at least one selected from a polyvinyl alcohol (PVA) fiber, a polyethylene fiber, a nylon fiber, a polyurethane fiber, and an ethylene-vinyl alcohol copolymer fiber can be used.

Note that, the heat insulation material can be produced by using a papermaking method, and since it is difficult to raise the heating temperature at this time higher than 250°C, the glass transition point of the organic fiber is preferably 250°C or lower, and more preferably 200°C or lower.

The lower limit value of the glass transition point of the organic fiber is also not particularly limited. When a difference from the glass transition point of the above resin binder is 10°C or more, the resin binder solidifies after the organic fiber in a semi-molten state completely solidifies in a cooling step during production, so that a sufficient effect of reinforcing a framework by the resin binder can be obtained. Therefore, the difference between the glass transition point of the resin binder and the glass transition point of the organic fiber is preferably 10°C or more, and more preferably 30°C or more.

On the other hand, when the difference in glass transition point therebetween is 130°C or less, the time from a time when the organic fiber completely solidifies to a time when the resin binder begins to solidify can be appropriately adjusted, and the resin binder solidifies while remaining in a well-dispersed state, so that the effect of reinforcing the framework can be further obtained. Therefore, the difference between the glass transition point of the resin binder and the glass transition point of the organic fiber is preferably 130°C or less, more preferably 120°C or less, still more preferably 100°C or less, even more preferably 80°C or less, and particularly preferably 70°C or less.

In addition, two or more kinds of organic fibers can be contained, and in this case, any organic fiber may be used as long as at least one kind of organic fiber acts as a framework, that is, any organic fiber having a glass transition point higher than the glass transition point of the resin binder. Note that, similar to the above, the difference between the glass transition point of the resin binder and the glass transition point of the at least one kind of organic fiber is preferably 10°C or more, more preferably 30°C or more, still more preferably 130°C or less, even more preferably 120°C or less, even still more preferably 100°C or less, yet still more preferably 80°C or less, and particularly preferably 70°C or less.

When the contents of the organic fiber and the resin binder are appropriately controlled, the organic fiber can sufficiently function as a framework, and a sufficient effect of reinforcing the framework by the resin binder can be obtained. The content of the organic fiber is preferably 0.5 mass% or more, and more preferably 1 mass% or more with respect to the total mass of the heat insulation material. In addition, it is preferably 12 mass% or less, and more preferably 8 mass% or less. Note that, when a plurality of organic fibers having a glass transition point higher than the glass transition point of the resin binder are contained, the total amount of the plurality of organic fibers is preferably within the range of the content of the organic fiber described above.

As described above, when two or more kinds of organic fibers are contained, it is sufficient that at least one kind of organic fiber has a glass transition point higher than the glass transition point of the resin binder, and it is more preferable that other organic fibers include a crystalline organic fiber having no glass transition point.

The crystalline organic fiber having no glass transition point can also be contained, but the crystalline organic fiber does not have a softening point, even when the organic fiber serving as the framework is exposed to such a high temperature as to soften, the strength of the entire heat insulation material can be maintained. In addition, when the crystalline organic fiber is contained, this organic fiber also acts as a framework of the heat insulation material at room temperature. Therefore, the flexibility and handling properties of the heat insulation material can be improved.

Note that, examples of the crystalline organic fiber include a polyester (PET) fiber.

In addition, when performing a papermaking method in the production of a heat insulation material, it is preferable to use water as a dispersion liquid, and it is preferable that the organic fiber has a low solubility in water. A dissolution temperature in water can be used as an indicator of the solubility in water. The dissolution temperature in water of the organic fiber is preferably 60°C or higher, more preferably 70°C or higher, and still more preferably 80°C or higher

The fiber length of the organic fiber is also not particularly limited, and from the viewpoint of ensuring the moldability and the processability, the average fiber length is preferably 10 mm or less. On the other hand, from the viewpoint of making the organic fiber function as a framework and ensuring compressive strength of the heat insulation material, the average fiber length is preferably 0.5 mm or more.

(Inorganic Particle)

Further, an inorganic particle can also be contained. When an average secondary particle diameter of the inorganic particle is 0.01 $\mu$m or more, the inorganic particle is easily available and an increase in production cost can be suppressed. When the average secondary particle diameter is 200 $\mu$m or less, a desired heat insulation effect can be obtained. Therefore, the average secondary particle diameter of the inorganic particle is preferably 0.01 $\mu$m or more and 200 $\mu$m or less, and more preferably 0.05 $\mu$m or more and 100 $\mu$m or less.

As the inorganic particle, a single kind of inorganic particle may be used, or two or more kinds of inorganic particles (a first inorganic particle and a second inorganic particle) may be used in combination. From the viewpoint of a heat transfer suppression effect, the first inorganic particle and the second inorganic particle are preferably a particle composed of at least one kind of inorganic material selected from an oxide particle, a carbide particle, a nitride particle, and an inorganic hydrate particle, and more preferably an oxide particle. The forms of the first inorganic particle and the second inorganic particle are not particularly limited. It is preferable to contain at least one kind selected from a nanoparticle, a hollow particle, and a porous particle. Specifically, a silica nanoparticle, a metal oxide particle, an inorganic balloon such as a microporous particle or a hollow silica particle, a particle composed of a thermally expandable inorganic material, a particle composed of a hydrous porous material, or the like can also be used.

Note that, when two or more kinds of inorganic particles having different heat transfer suppression effects are combined, cooling can be made in multiple stages and a heat absorption effect can be exhibited over a wider temperature range. Specifically, it is preferable to use a large-diameter particle and a small-diameter particle in combination. For example, in the case of using a nanoparticle as one of the inorganic particles, it is preferable to contain an inorganic particle composed of a metal oxide as the other inorganic particle. Hereinafter, the inorganic particle will be described in more detail, with a small-diameter inorganic particle as the first inorganic particle and a large-diameter inorganic particle as the second inorganic particle.

(First Inorganic Particle)

(Oxide Particle)

The first inorganic particle is preferably an oxide particle. An oxide particle has a high refractive index and has a high effect of diffusely reflecting light, so that radiant heat transfer can be suppressed, particularly in a high temperature range with abnormal heat generation or the like. As the oxide particle, at least one kind of particle selected from silica, titania, zirconia, zircon, barium titanate, zinc oxide, and alumina can be used. Particularly, silica is a component having a high heat insulation property, and titania is a component having a high refractive index compared to other metal oxides, and has a high effect of diffusely reflecting light and blocking radiant heat in a high temperature range of 500°C or higher. Therefore, silica and titania are most preferably used as the oxide particle.

Since the particle diameter of the oxide particle may influence an effect of reflecting radiant heat, when an average primary particle diameter thereof is limited to a predetermined range, an even higher heat insulation property can be obtained. That is, when the average primary particle diameter of the oxide particle is 0.001 $\mu$m or more, a wavelength thereof is sufficiently larger than a wavelength of light that contributes to heating, and it diffusely reflects the light efficiently. Therefore, in a high temperature range of 500°C or higher, the radiant heat transfer of heat within the heat transfer suppression sheet can be suppressed, and the heat insulation property can be further improved. On the other hand, when the average primary particle diameter of the oxide particle is 50 $\mu$m or less, even with compression, the number of contact points between the particles does not increase, and it is difficult to form a conductive heat transfer path. Therefore, the influence on the heat insulation property particularly in a normal temperature range where the conductive heat transfer is dominant can be reduced.

Note that, in the present embodiment, the average primary particle diameter can be determined by observing particles with a microscope, comparing the particles with a standard scale, and taking an average of any 10 particles.

(Nanoparticle)

The first inorganic particle is preferably a nanoparticle, and the nanoparticle has a low density and thus suppresses the conductive heat transfer, and voids are further finely dispersed, so that an excellent heat insulation property of suppressing convective heat transfer can be obtained. Therefore, it is preferable to use a nanoparticle since it can suppress the conduction of heat between adjacent nanoparticles during normal use of a battery in a normal temperature range.

Note that, the nanoparticle refers to a nanometer-order particle having a spherical or nearly spherical shape and having an average primary particle diameter of less than 1 $\mu$m.

In addition, when a nanoparticle having a small average primary particle diameter is used as the oxide particle, even when an internal density of the heat insulation material increases due to expansion due to thermal runaway of the battery cell, an increase in conductive heat transfer of the heat insulation material can be suppressed. This is thought to be because the nanoparticle tends to form fine voids between particles due to a repulsive force caused by static electricity, and the bulk density thereof is low, so that it filled with the particle so as to provide a cushioning property.

Note that, when the nanoparticle is used as the first inorganic particle, the kind thereof is not particularly limited as long as the above definition of nanoparticle is met. For example, since a silica nanoparticle is a material having a high heat insulation property and has a few contact points between particles, the amount of heat conducted by the silica nanoparticle is smaller than that in a case of using a silica particle having a large particle diameter. In addition, since a generally available silica nanoparticle has a bulk density of about 0.1 (g/cm$^3$), even when a large compressive stress is applied to, for example, the heat insulation material, the size (area) or the number of contact points between the silica nanoparticles does not increase remarkably, and the heat insulation property can be maintained. Therefore, it is preferable to use a silica nanoparticle as the nanoparticle. As the silica nanoparticle, wet silica, dry silica, aerogel, or the like can be used.

When the average primary particle diameter of the nanoparticle is limited to a predetermined range, an even higher heat insulation property can be obtained. That is, when the average primary particle diameter of the nanoparticle is 1 nm or more and 100 nm or less, the convective heat transfer and the conductive heat transfer of the heat within the heat insulation material can be suppressed particularly in a temperature range of lower than 500°C, and the heat insulation property can be further improved. In addition, even when a compressive stress is applied, voids remaining between the nanoparticles and contact points between many particles can suppress the conductive heat transfer, and the heat insulation property can be maintained. In addition, the average primary particle diameter of the nanoparticle is more preferably 2 nm or more, and still more preferably 3 nm or more. On the other hand, the average primary particle diameter of the nanoparticle is more preferably 50 nm or less, and still more preferably 10 nm or less.

(Inorganic Hydrate Particle)

The inorganic hydrate particle exhibits a so-called "heat absorption effect" that the inorganic hydrate particle receives heat from a heating element, thermally decomposes when reaching a thermal decomposition start temperature or higher, releases crystal water thereof, and lowers the temperature of the heating element and surroundings. The inorganic hydrate particle forms a porous material after releasing the crystal water, and exhibits a heat insulation effect due to countless air pores thereof.

Specific examples of the inorganic hydrate include aluminum hydroxide ($Al(OH)_3$), magnesium hydroxide ($Mg(OH)_2$), calcium hydroxide ($Ca(OH)_2$), zinc hydroxide ($Zn(OH)_2$), iron hydroxide ($Fe(OH)_2$), manganese hydroxide ($Mn(OH)_2$), zirconium hydroxide ($Zr(OH)_2$), and gallium hydroxide ($Ga(OH)_3$).

For example, aluminum hydroxide has about 35% crystal water, and as shown in the following formula, thermally decomposes to release the crystal water and exhibits a heat absorption effect. Then, after releasing the crystal water, aluminum hydroxide forms alumina ($Al_2O_3$), which is a porous material, and functions as a heat insulation material.

$$2Al(OH)_3 \rightarrow Al_2O_3 + 3H_2O$$

Note that, in a battery cell that has experienced thermal runaway, the temperature rapidly rises to higher than 200°C and continues to rise to around 700°C. Therefore, it is preferable that the inorganic particle is composed of an inorganic hydrate whose thermal decomposition start temperature is 200°C or higher

The thermal decomposition start temperature of the above inorganic hydrates is about 200°C for aluminum hydroxide, is about 330°C for magnesium hydroxide, is about 580°C for calcium hydroxide, is about 200°C for zinc hydroxide, is about 350°C for iron hydroxide, is about 300°C for manganese hydroxide, is about 300°C for zirconium hydroxide, and is about 300°C for gallium hydroxide. All of these almost overlap the temperature range of the rapid temperature rise of a battery cell that has experienced thermal runaway, and can effectively prevent the temperature rise. Therefore, these are preferred inorganic hydrates.

When the average particle diameter of the inorganic hydrate particle is too large, it takes a certain amount of time for the inorganic hydrate particle near a center of the heat insulation material to reach the thermal decomposition temperature thereof, so that the inorganic hydrate particle near the center of the heat insulation material may not be completely thermally decomposed. Therefore, the average secondary particle diameter of the inorganic hydrate particle is preferably 0.01 $\mu$m or more and 200 $\mu$m or less, and more preferably 0.05 $\mu$m or more and 100 $\mu$m or less.

(Particle composed of Thermally Expandable Inorganic Material)

Examples of the thermally expandable inorganic material include vermiculite, bentonite, mica, and perlite.

(Particle composed of Hydrous Porous Material)

Specific examples of the hydrous porous material include zeolite, kaolinite, montmorillonite, acid clay, diatomaceous earth, wet silica, dry silica, aerogel, mica, and vermiculite.

(Inorganic Balloon)

When an inorganic balloon is contained, the convective heat transfer or the conductive heat transfer of the heat within the heat insulation material can be suppressed in a temperature range of lower than 500°C, and the heat insulation property of the heat insulation material can be further improved.

As the inorganic balloon, at least one kind selected from a whitebait balloon, a silica balloon, a fly ash balloon, a barite balloon, and a glass balloon can be used.

The content of the inorganic balloon is preferably 60 mass% or less with respect to the total mass of the heat insulation material.

In addition, the average particle diameter of the inorganic balloon is preferably 1 $\mu$m or more and 100 $\mu$m or less.

(Second Inorganic Particle)

The second inorganic particle is not particularly limited as long as it is different in kind, particle diameter, or the like from the first inorganic particle. As the second inorganic particle, an oxide particle, a carbide particle, a nitride particle, an inorganic hydrate particle, a silica nanoparticle, a metal oxide particle, an inorganic balloon such as a microporous particle or a hollow silica particle, a particle composed of a thermally expandable inorganic material, a particle composed of a hydrous porous material, or the like can be used. Details of these are as described above.

Note that, a nanoparticle has extremely low conductive heat transfer and can maintain an excellent heat insulation property even when a compressive stress is applied to the heat insulation material. In addition, a metal oxide particle such as titania has a high effect of blocking radiant heat. Further, when a large-diameter inorganic particle and a small-diameter inorganic particle are used, the small-diameter inorganic particle enters gaps between the large-diameter inorganic particles, leading to a more dense structure, and the heat transfer suppression effect can be improved. Therefore, when the nanoparticle is used as the first inorganic particle, it is preferable that the heat insulation material further contains, as the second inorganic particle, a particle composed of a metal oxide having a diameter larger than that of the first inorganic particle.

Examples of the metal oxide include silicon oxide, titanium oxide, aluminum oxide, barium titanate, zinc oxide, zircon, and zirconium oxide. Particularly, titanium oxide (titania) is a component having a high refractive index compared to other metal oxides, and has a high effect of diffusely reflecting light and blocking radiant heat in a high temperature range of 500°C or higher. Therefore, titania is most preferably used.

When the average primary particle diameter of the second inorganic particle is 1 $\mu$m or more and 50 $\mu$m or less, the radiant heat transfer can be efficiently suppressed in a high temperature range of 500°C or higher The average primary particle diameter of the second inorganic particle is more preferably 5 $\mu$m or more and 30 $\mu$m or less, and most preferably 10 $\mu$m or less.

(Method for Producing Heat Insulation Material Containing Inorganic Fiber)

The material for forming the heat insulation material containing an inorganic fiber are as described above, and in order to produce the heat insulation material, it is preferable to use a papermaking method. That is, it is produced by dispersing the inorganic fiber and other blending materials as the materials for forming the heat insulation material in water, and dehydrating, molding, and drying a dispersion liquid thereof.

(Infusible Fiber)

Examples of the infusible fiber in the heat insulation material include fibers obtained by subjecting thermoplastic resins, such as polyacrylonitrile, cellulose, and pitch, to an infusibility treatment. Note that, the infusible fiber is, for example, a fiber that has been subjected to an infusibility treatment, and examples of the infusibility treatment include a method of crosslinking by irradiation with radiation, electron beams, or the like, and a method of exposing a material to a high temperature in oxygen or water vapor and making the material infusible by the action of oxygen.

(Carbon Content)

The infusible fiber preferably has a carbon content of 55 mass% to 95 mass%. When the carbon content is 55 mass% or more, a weight loss due to thermal decomposition is already underway, so that the heat insulation material shrinks little due to the thermal decomposition, and retains the original shape and maintains the heat insulation property even when exposed directly to flame during thermal runaway. When the carbon content is 95 mass% or less, an endothermic reaction occurs to remove components other than carbon and to change the structure to a structure consisting only of carbon, so that a time for heat to reach a back surface of the flameproof material can be delayed.

A preferred lower limit of the carbon content is 60 mass% or more. In addition, a preferred upper limit of the carbon content is 90 mass% or less, and a more preferred upper limit of the carbon content is 85 mass% or less.

The carbon content can be adjusted by a heat treatment. For example, a heat treatment in the air or in oxygen within a range of 150°C to 300°C can further promote the infusibility treatment and remove components other than carbon to increase the carbon content. For example, a heat treatment within a range of 300°C to 1000°C can advance formation of a condensed polycyclic aromatic structure and generate a decomposition gas to increase the carbon content.

Note that, the infusible fiber is not limited to a fiber obtained by subjecting a thermoplastic fiber to an infusibility treatment. An inorganic fiber may be used as long as the carbon content is within the above range.

(Fiber Shape)

It is preferable that the infusible fiber is composed of short fibers, which are aggregated to form a mat, a papermaking product, or a blanket as a whole.

The short fibers indicate non-continuous fibers. Although the continuous fibers form a fiber bundle in which the fibers are oriented in the same direction as in cloth or filament winding, the use of the fibers results in an aggregate (a mat or a blanket, or a papermaking product) of fibers oriented in random directions. Since a heat insulation material using short fibers has a short conductive path, conductivity can be lowered even when carbonization progresses due to carbonized fibers or thermal runaway. In addition, the fibers are randomly oriented, and the fibers tend to come into point contact with each other, making it possible to lower heat conduction.

The papermaking product can be obtained by dispersing milled fibers or chopped fibers (fiber length of about 0.01 mm to 10 mm) as the infusible fiber in water, and then performing papermaking. The "papermaking" refers to "a process of dispersing short inorganic fibers in a solvent (water), adding an organic binder, an inorganic binder, a pH adjuster, or the like to the mixed liquid if necessary, pouring the mixed liquid into a molding machine with a mesh for filtration formed on the bottom, and removing the solvent in the mixed liquid (dehydration treatment)". The mat or the blanket can be obtained by laminating and compressing the infusible fiber having a fiber length of about 10 mm to 1000 mm. At this time, a binder may be added to retain the overall strength and shape. Note that, as the binder, organic binders such as a resin, inorganic binders such as a ceramic precursor, and the like can be used.

The infusible fiber preferably has an average fiber diameter of 1 $\mu$m to 30 $\mu$m. When the average fiber diameter of the infusible fiber is 1 $\mu$m or more, even during exposure to a high temperature, a rate of air oxidation and sublimation can be suppressed and a flameproof effect can be maintained for a long time. On the other hand, when the average fiber diameter of the infusible fiber is 30 $\mu$m or less, a certain degree of flexibility can be retained even during exposure to a high temperature and carbonization, and damages are less likely to occur even when deformation or impact occurs. The average fiber diameter of the infusible fiber is calculated as follows. Any 10 infusible fibers are extracted from a sheet after molding using tweezers. For each extracted infusible fiber, the fiber diameter at any one point is measured using SEM. The average value of the 10 measured fiber diameters is defined as the average fiber diameter of the infusible fiber.

In addition to the infusible fiber, the heat insulation material can also contain the same organic fiber and inorganic particle as described above.

The heat insulation material is configured as described above, and the heat insulation material is an aggregate of fibers, preferably short fibers, and thus easily absorbs moisture and the leaked electrolytic solution. Therefore, it is preferable to cover a surface of a heat insulation material 10 opposite to an inorganic fiber cloth 20, for example, the surface facing a storage battery in a battery module, with a covering layer.

The covering layer preferably has one or more layers selected from a resin, a metal foil, and mica, and has excellent strength and permeation prevention performance. As a method for joining the covering layer, an adhesive can be used, heat fusion can be used in the case of a resin, and vapor deposition can be used in the case of a metal foil.

Note that, the covering layer can also be used to cover a heat insulation material containing the above inorganic fiber.

<Inorganic Fiber Cloth>

There are no restrictions on an inorganic fiber in the inorganic fiber cloth, and the inorganic fiber used in the above heat insulation material can also be used. Among them, a silica fiber, an alumina fiber, a glass fiber, and a metal fiber are preferred because of being inexpensive, having excellent handling properties, and having high heat resistance.

The inorganic fiber cloth is not limited in shape, such as a fiber diameter, as long as the inorganic fiber is woven into a cloth shape. Note that, in consideration of preventing the collision of scattered matters during thermal runaway, the smaller the opening is, the better.

<Joining Method>

The heat insulation material and the inorganic fiber cloth are as described above, and are joined to each other by physical means rather than using an adhesive. Therefore, there is no need to select an adhesive or apply a coating step, making the production easy, and there is no risk of decrease in adhesive strength. In addition, there is no risk that the adhesive peels off when a flameproof material 1 is subjected to external forces such as bending or twisting, and the followability is also improved.

As the physical means, needling, a resin staple or tag pin, and thread sewing as shown below are suitable, and these may be combined.

(Needling)

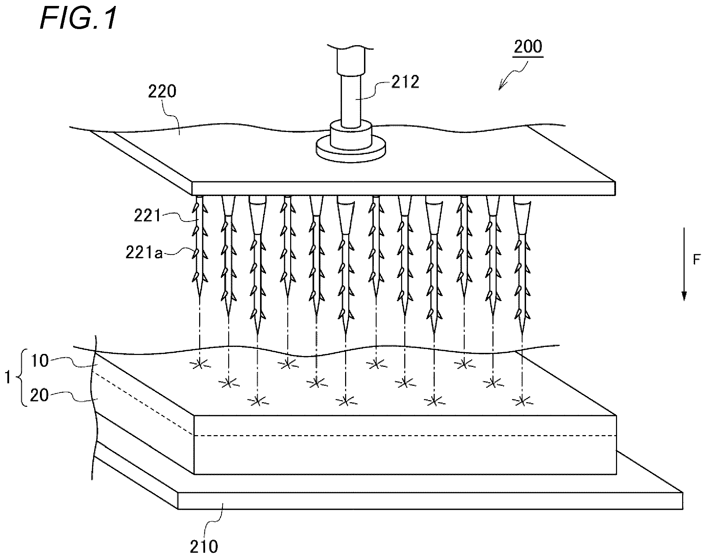

The needling is performed using, for example, a needling device 200 shown in Fig. 1. The shown needling device 200 includes a support plate 210 on which the above heat insulation material 10 and inorganic fiber cloth 20 constituting the flameproof material 1 are placed in a stacked state, a piston 212 that can reciprocate up and down along a sticking direction indicated by reference sign F in the figure, and a needle plate 220 attached to the piston 212 facing the support plate 210.

A plurality of needles 221 are attached to a surface of the needle plate 220 facing the support plate 210 at predetermined intervals, and have a spiky flower frog shape. The needle 221 has a pointed needle shape, and a plurality of thorn-like barbs 221a protruding toward a tip direction of the needle 221 are formed.

Using such a needling device 200, the needle plate 220 is lowered to a position where a tip of the needle 221 reaches a predetermined depth corresponding to a thickness of the inorganic fiber cloth 20, then the needle plate 220 is raised until the tip of the needle 221 is positioned above the heat insulation material 10, and the needle 221 is withdrawn, whereby the joining between the heat insulation material 10 and the inorganic fiber cloth 20 by needling is completed.

Note that, it is also possible to push down the needle plate 220 until a position where the needle 221 completely penetrates the inorganic fiber cloth 20. In this case, it is preferable to provide a through hole in a portion of the support plate 210 facing the needle 221, and to insert the tip of the needle 221 into the through hole when the needle 221 is lowered to a position where it penetrates the inorganic fiber cloth 20.

If necessary, the penetration and withdrawal of the needle 221 may be repeated.

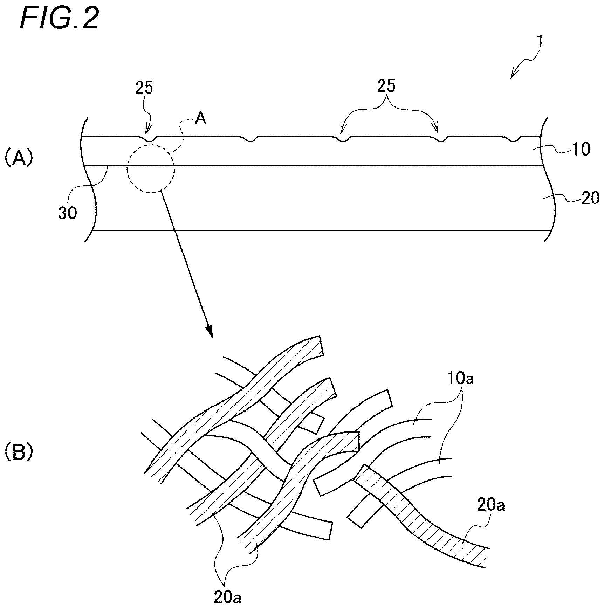

A cross section of the obtained flameproof material 1 is shown in (A) in Fig. 2. Note that, a recessed portion indicated by reference sign 25 in the figure is a needle mark.

As shown enlarged in (B) in Fig. 2, at a joint portion 30 between the heat insulation material 10 and the inorganic fiber cloth 20 right below the needle mark 25, an inorganic fiber 20a in the inorganic fiber cloth 20 and a fiber 10a (that is, an inorganic fiber or an infusible fiber) in the heat insulation material 10 are intricately entangled and intertwined. This intertwining ensures and maintains a good joining state between the heat insulation material 10 and the inorganic fiber cloth 20.

(Resin Staple)

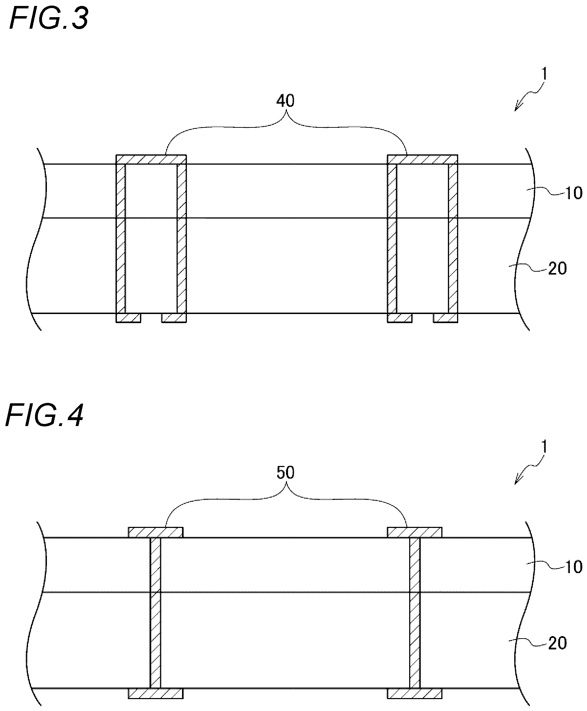

As shown in Fig. 3, the heat insulation material 10 and the inorganic fiber cloth 20 can also be joined by inserting resin staples 40 at a predetermined interval. Since the staple is made of a resin, electrical insulation can be ensured when applied to a battery module. As the resin, a polyethylene resin, a polypropylene resin, an acrylonitrile-butadiene-styrene resin, and the like are highly versatile and suitable.

The resin staples 40 may be inserted in the same direction as shown, or may be inserted alternately from a heat insulation material 10 side and from a inorganic fiber cloth 20 side, although not shown.

(Resin Tag Pin)

As shown in Fig. 4, instead of the resin staples 40, a resin tag pin 50 can also be used. The resin tag pin 50 is continuous with a single resin wire, and has a substantially "I" shape with both ends extending outward in two directions.

(Thread Sewing)

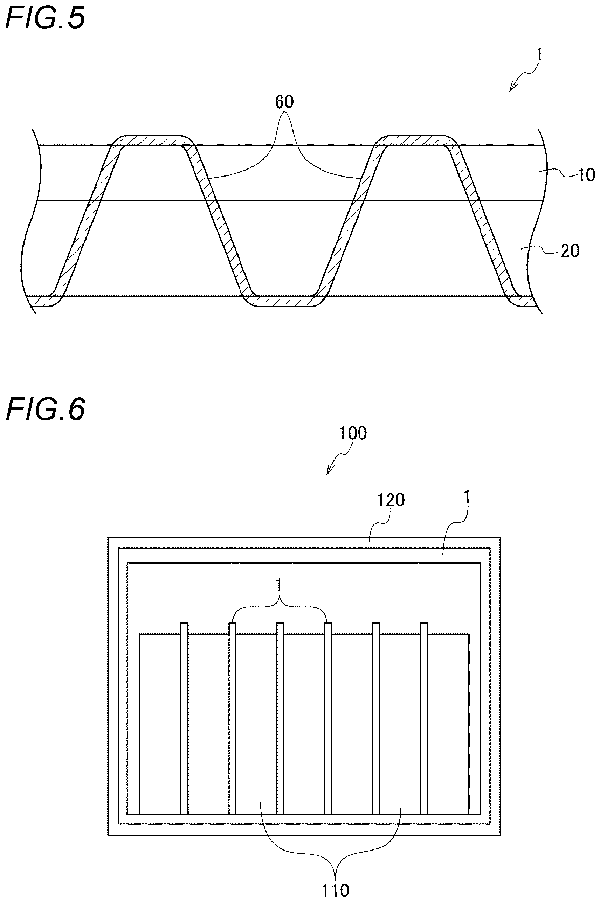

As shown in Fig. 5, the heat insulation material 10 and the inorganic fiber cloth 20 can also be joined to each other using a thread 60. The kind of the thread 60 is not limited, and may be a natural fiber such as cotton, a resin fiber, or a composite fiber with an inorganic material.

[Battery Module]

As shown in Fig. 6, a battery module 100 includes a plurality of storage batteries 110 housed in a battery case 120. In the present embodiment, the above flameproof material 1 is provided on at least one of a canopy, a side wall, and a bottom wall (the entire surface of these in the figure) of the battery case 120 such that the inorganic fiber cloth 20 faces the storage batteries 110. Alternatively, although not shown, the flameproof material 1 may be provided between the storage batteries 110.

Although various embodiments have been described above, it is needless to say that the present invention is not limited to such examples. It is apparent to those skilled in the art that various changes and modifications can be conceived within the scope of the claims, and it is understood that such changes and modifications are also encompassed within the technical scope of the present invention. In addition, the constituent elements in the above embodiments may be freely combined without departing from the gist of the present invention.

Note that the present application is based on a Japanese patent application (Japanese Patent Application No. 2022-045973) filed on March 22, 2022, and the contents thereof are incorporated herein by reference.

REFERENCE SIGNS LIST

1 flameproof material
10 heat insulation material
20 inorganic fiber cloth

25 needle mark
30 joint portion
40 resin staple
50 resin tag pin
60 thread
100 battery module
110 storage battery
120 battery case
200 needling device
210 support plate
220 needle plate
221 needle

## Claims

1. A flameproof material comprising:

   a heat insulation material containing an inorganic fiber or an infusible fiber; and
   an inorganic fiber cloth, wherein
   the heat insulation material and the inorganic fiber cloth are integrated to each other by physical means.

2. The flameproof material according to claim 1, wherein the physical means is at least one of needling, a resin staple, a resin tag pin, or thread sewing.

3. The flameproof material according to claim 1, wherein the inorganic fiber or the infusible fiber in the heat insulation material and an inorganic fiber of the inorganic fiber cloth are intertwined to be integrated.

4. The flameproof material according to claim 3, wherein the physical means is needling.

5. The flameproof material according to any one of claims 1 to 4, wherein the inorganic fiber of the heat insulation material contains a first inorganic fiber and a second inorganic fiber different from each other in at least one property selected from an average fiber diameter, a shape, and a glass transition point.

6. The flameproof material according to claim 5, wherein

   the average fiber diameter of the first inorganic fiber is larger than the average fiber diameter of the second inorganic fiber, and
   the first inorganic fiber is linear or acicular, and the second inorganic fiber is dendritic or curly.

7. The flameproof material according to claim 5 or 6, wherein

   the first inorganic fiber is an amorphous fiber,
   the second inorganic fiber is at least one kind of fiber selected from a crystalline fiber and an amorphous fiber which has a glass transition point higher than the glass transition point of the first inorganic fiber, and
   the average fiber diameter of the first inorganic fiber is larger than the average fiber diameter of the second inorganic fiber.

8. The flameproof material according to any one of claims 1 to 7, wherein the infusible fiber has a carbon content of 55 mass% to 95 mass%.

9. The flameproof material according to any one of claims 1 to 8, wherein the infusible fiber is composed of a short fiber.

10. The flameproof material according to any one of claims 1 to 9, wherein the infusible fiber has an average fiber diameter of 1 $\mu$m to 30 $\mu$m.

11. The flameproof material according to any one of claims 1 to 10, wherein the heat insulation material contains an organic fiber.

12. The flameproof material according to any one of claims 1 to 11, wherein the heat insulation material contains an inorganic particle.

13. The flameproof material according to claim 12, wherein the inorganic particle includes a first inorganic particle and a second inorganic particle having average particle diameters different from each other

14. The flameproof material according to claim 13, wherein the first inorganic particle is composed of at least one kind selected from an oxide particle, a carbide particle, a nitride particle, and an inorganic hydrate particle.

15. The flameproof material according to claim 13 or 14, wherein the first inorganic particle is composed of at least one kind selected from a nanoparticle, a hollow particle, and a porous particle.

16. The flameproof material according to any one of claims 13 to 15, wherein the first inorganic particle is composed of at least one kind selected from an oxide particle, a carbide particle, a nitride particle, and an inorganic hydrate particle.

17. The flameproof material according to any one of claims 13 to 16, wherein the second inorganic particle is a metal oxide particle.

18. A method for producing the flameproof material according to any one of claims 1 to 17, comprising:
joining the heat insulation material and the inorganic fiber cloth by physical means.

19. The method for producing the flameproof material according to claim 18, wherein the physical means is at least one of needling, a resin staple, or thread sewing.

20. A battery module comprising:

a storage battery housed in a battery case; and
the flameproof material according to any one of claims 1 to 17 provided on at least one of a canopy of the battery case, a side wall of the battery case, a bottom wall of the battery case, or between the storage batteries.

*FIG.1*

EP 4 497 589 A1

*FIG.2*

(A)

25    A    25    1

10

30    20

(B)

10a

20a

20a

FIG.3

40

1

10

20

FIG.4

50

1

10

20

*FIG.5*

*FIG.6*

## INTERNATIONAL SEARCH REPORT

| International application No. |
| --- |
| **PCT/JP2023/011330** |

**A. CLASSIFICATION OF SUBJECT MATTER**

*B32B 5/26*(2006.01)i; *D04H 1/4209*(2012.01)i; *H01M 10/625*(2014.01)i; *H01M 10/6554*(2014.01)i; *H01M 10/6555*(2014.01)i; *H01M 10/658*(2014.01)i; *H01M 50/204*(2021.01)i

FI: B32B5/26; D04H1/4209; H01M10/658; H01M10/625; H01M10/6555; H01M10/6554; H01M50/204 401F

According to International Patent Classification (IPC) or to both national classification and IPC

**B. FIELDS SEARCHED**

Minimum documentation searched (classification system followed by classification symbols)

B32B5/26; D04H1/4209; H01M10/625; H01M10/6554; H01M10/6555; H01M10/658; H01M50/204

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | WO 2019/188276 A1 (TORAY INDUSTRIES, INC.) 03 October 2019 (2019-10-03) paragraphs [0009], [0025]-[0031], [0047]-[0049], [0052], [0080], claims | 1-11, 18-20 |
| A | entire text | 12-17 |
| X | JP 2021-524404 A (3M INNOVATIVE PROPERTIES CO.) 13 September 2021 (2021-09-13) claims, paragraphs [0001], [0025], [0040]-[0052], [0076]-[0095], [0103], [0110] | 1-12, 18-20 |
| A | entire text | 13-17 |
| A | JP 2021-507483 A (H.K.O. ISOLIER- UND TEXTILTECHNIK GMBH) 22 February 2021 (2021-02-22) entire text | 1-20 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **14 June 2023** | **27 June 2023** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
**Information on patent family members**

International application No.

**PCT/JP2023/011330**

| Patent document cited in search report | | | Publication date (day/month/year) | Patent family member(s) | | | Publication date (day/month/year) |
|---|---|---|---|---|---|---|---|
| WO | 2019/188276 | A1 | 03 October 2019 | US | 2021/0001596 | A1 | |
| | | | | paragraphs [0011], [0033]-[0042], [0059]-[0061], [0064], [0108], claims | | | |
| | | | | EP | 3779012 | A1 | |
| | | | | CN | 111902576 | A | |
| | | | | KR | 10-2020-0138186 | A | |
| | | | | CA | 3094971 | A1 | |
| | | | | BR | 112020020072 | A | |
| | | | | RU | 2020134937 | A | |
| | | | | TW | 201942434 | A | |
| JP | 2021-524404 | A | 13 September 2021 | US | 2021/0197520 | A1 | |
| | | | | paragraphs [0001], [0029]-[0030], [0045]-[0057], [0082]-[0103], [0111], [0119], claims | | | |
| | | | | WO | 2020/019114 | A1 | |
| | | | | EP | 3826845 | A1 | |
| | | | | KR | 10-2021-0019104 | A | |
| | | | | CN | 112585008 | A | |
| | | | | KR | 10-2022-0060561 | A | |
| JP | 2021-507483 | A | 22 February 2021 | US | 2021/0074960 | A1 | |
| | | | | whole document | | | |
| | | | | WO | 2019/121641 | A1 | |
| | | | | EP | 3729536 | A1 | |
| | | | | DE | 102018000421 | A1 | |
| | | | | KR | 10-2020-0100639 | A | |
| | | | | CN | 111512464 | A | |

Form PCT/ISA/210 (patent family annex) (January 2015)

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021507483 A

- JP 2022045973 A